# EUROPÄISCHE PATENTSCHRIFT

(11) **EP 2 591 254 B1**
(45) Veröffentlichungstag und Bekanntmachung des Hinweises auf die Patenterteilung: **28.10.2015**
(21) Anmeldenummer: 11735832.5
(22) Anmeldetag: 07.07.2011
(51) Int. Cl.: F16J 15/16, F16J 15/44, F16J 15/447, F16J 15/46

(54) **Verdichter mit einer Wellendichtungsvorrichtung**
Compressor with shaft sealing device
Compresseur avec dispositf d'étanchéité d'arbre

(30) Priorität: 07.07.2010 DE 102010026336
(43) Veröffentlichungstag der Anmeldung: 15.05.2013
(73) Patentinhaber: Siemens Aktiengesellschaft, 80333 München (DE)
(72) Erfinder: MATEMAN, Gesinus, NL-7552 SH Hengelo (NL); ZACHARIAS, Wolfgang, 47198 Duisburg (DE)
(86) Internationale Anmeldenummer: PCT/EP2011/061524
(87) Internationale Veröffentlichungsnummer: WO 2012/004350

(56) Entgegenhaltungen:
- EP-A2- 0 142 236
- FR-A1- 2 792 687
- US-A- 5 292 138
- US-A1- 2005 248 093

## Beschreibung

Die Erfindung betrifft einen Verdichter mit einer Wellendichtungsvorrichtung, insbesondere einer Trockengasdichtungsvorrichtung, mit zumindest einer Dichtung, die zwischen einer Welle und zumindest einem um die Welle angeordneten Bauteil ausgebildet ist.

Eine Abdichtung von Turbokompressoren an Wellenenden erfolgt bei Prozessverdichtern, die mit toxischen oder explosiven Gasen arbeiten, üblicherweise mit Trockengasdichtungen. Hierbei werden beispielsweise Trockengasdichtungen in Tandemanordnung eingesetzt. Kommt es, insbesondere bei hohen Abdichtdrücken, zu einem Schadensfall, kann Prozessgas in hohen Mengen aus dem Prozessgasraum über die Tandemgasdichtung austreten und nicht mehr komplett über Entlüftungsleitungen abgeführt werden. Dadurch kommt es zu einem Druckanstieg in der Entlüftungskammer und zu einem Übertritt von Prozessgas in beispielsweise einen Lagerraum oder in an die Entlüftungskammer angeschlossene Komponenten. Dies stellt ein erhebliches Sicherheitsrisiko dar. Um die Sicherheit zu erhöhen werden bisher die Entlüftungskammer und -Leitungen bzw. die angeschlossenen Komponenten an die Gasart und eine potentiell austretende Gasmenge angepasst. Diese Anpassungen sind, insbesondere bei hohen Abdichtdrücken, sehr teuer oder technisch nicht realisierbar.

FR 2 792 687 A1 offenbart einen gattungsgemäßen Verdichter.

Es ist eine Aufgabe der vorliegenden Erfindung, einen Verdichter mit einer Wellendichtungsvorrichtung anzugeben, die einen hohen Sicherheitsstandard, insbesondere bei einem Schadensfall, bereitstellt.

Diese Aufgabe wird durch einen Verdichter mit einer Wellendichtungsvorrichtung der Eingangs genannten Art gelöst, bei der zumindest ein Schließmittel zum selbsttätigen Schließen bei einem Druckunterschied über die Dichtung vorgesehen ist.

Durch die erfindungsgemäße Ausgestaltung kann die im Schadensfall aus dem Prozessraum austretende Gasmenge vorteilhaft reduziert werden, wodurch ein Druckanstieg in einer Entlüftungskammer und Entlüftungsleitungen minimiert und ein Gasübertritt von Prozessgas, wie beispielsweise Sauerstoff, in den Lagerraum verhindert wird. Ferner kann so ein hoher Sicherheitsstandard konstruktiv einfach gewährleistet werden. Des Weiteren kann somit eine Sicherheitsanalyse, die vor Inbetriebnahme des Verdichters durchgeführt wird, genauer und mit weniger Variablen durchgeführt werden.

Insbesondere ist die Wellendichtungsvorrichtung ein Bestandteil einer Reingaslabyrinthdichtung, die an einer Seite eines Prozessgasraumes des Verdichters angeordnet ist, die in Richtung eines Lagerraums des Verdichters weist. Die Dichtung trennt einen ersten Raum, wie beispielsweise den Prozessgasraum, von einem zweiten Raum, wie insbesondere einem Reingasraum, wobei in den beiden Räumen unterschiedliche Drücke herrschen, wobei in einem Normalbetrieb des Verdichters ein Druckunterschied Δp 0,1 bar oder mehr und weniger betragen kann.

Der Verdichter kann insbesondere als ein Radialverdichter ausgebildet sein und/oder eine und/oder mehre Stufen aufweisen. Generell wäre jedoch auch ein Einsatz der Wellendichtungsvorrichtung in jedem anderen, dem Fachmann als sinnvoll erscheinenden Verdichter denkbar. In diesem Zusammenhang soll unter einer "Welle" insbesondere ein Rotor verstanden werden. Das um die Welle angeordnete Bauteil kann hier von jedem, dem Fachmann als zweckdienlich erscheinenden Bauteil gebildet sein, stellt hier jedoch bevorzugt ein Gehäuse bzw. Außengehäuse des Verdichters dar.

Unter einem "Schließmittel" soll hier insbesondere ein Mittel verstanden werden, das einen Durchgang für ein Fluid und insbesondere für zumindest ein Gas verschließt und somit einen Fluidstrom und insbesondere einen Gasstrom in zumindest eine Fließrichtung, beispielsweise von dem Prozessgasraum in Richtung des Lagerraums, unterbindet. In diesem Zusammenhang soll unter der Wendung "Druckunterschied über die Dichtung" ein Unterschied zwischen einem Druck eines Dichtgases (p_{DG}) im Reingasraum und einem Druck eines Prozessgases (p_{PG}) im Prozessgasraum verstanden werden und insbesondere ein Druckunterschied bzw. eine Druckdifferenz, die sich einstellt, wenn der Druck des Prozessgases (p_{PG}) im Prozessgasraum höher ist als der Druck des Dichtgases (p_{DG}) im Reingasraum. Diese Druckdifferenz beträgt beispielsweise 50 - 300 bar. Dieser Fall stellt sich insbesondere durch einen Druckabfall des Drucks des Dichtgases (p_{DG}) unter den Druck des Prozessgases (p_{PG}) bei einem Defekt bzw. Schadensfalls eines Dichtungssystems, das zwischen dem Lagerraum und der Reingaslabyrinthdichtung angeordnet ist, ein. Das Dichtgas stellt hier beispielsweise gereinigtes Prozessgas oder ein weiteres Reingas aus einem anderen Prozess des Verdichters dar.

Das Dichtungssystem kann eine Lagerdichtung und/oder eine Tandemgasdichtung mit einer Außen- und einer Innendichtung umfassen. Unter "selbsttätig" soll hier insbesondere verstanden werden, dass das Schließmittel eigenständig bzw. selbständig und/oder unmittelbar auf den Druckunterschied aus eigener Kraft reagiert.

Der Durchgang des Fluids bzw. des Gases ist bevorzugt ein Spalt bzw. ein Radialspalt, der sich in Umfangsrichtung um die Welle erstreckt. Bevorzugt ist der Spalt zwischen der Welle und dem Schließmittel angeordnet. Des Weiteren wird vorgeschlagen, dass der Spalt zumindest in einem Betriebszustand besteht, in dem ein Druck eines Dichtgases (p_{DG}) größer als der Druck eines Prozessgases (p_{PG}) ist. Dies stellt den schadensfreien Normalbetrieb des Turbokompressors bzw. der Reingaslabyrinthdichtung dar, bei dem eingeleitetes Dichtgas durch seinen Druck (p_{DG}), der größer ist als der Druck (p_{PG}) des Prozessgas, ein Ausströmen des Prozessgases aus dem Prozessraum verhindert. Hierbei ist der Spalt funktionslos bezüglich einer Leckage und einem Austreibverhalten des Prozessgases aus dem Prozessgasraum. Durch die Realisierung des den Spalt schließenden Schließmittels kann ein Austreten des Prozessgases aus dem Prozessraum konstruktiv einfach und effektiv unterbunden werden. Zudem kann die Wellendichtungsvorrichtung und das gesamte Dichtungssystem bzw. die Entlüftungskammer und - Leitungen besonders Platz sparend ausgestaltet werden.

Die Dichtung kann beispielsweise eine rotatorische Dichtung, besonders vorteilhaft eine berührungslose Dichtung und besonders bevorzugt eine Labyrinthdichtung sein.

Vorteilhafterweise weist die Dichtung bzw. die Labyrinthdichtung zumindest einen Labyrintheinsatz auf. Zwischen dem Labyrintheinsatz bzw. den in Richtung der Welle weisenden Enden von Labyrinthspitzen und der Welle ist ein Spalt bzw. ein Radialspalt gebildet, der ein schadhaftes Anstoßen der Labyrinthspitzen an die Welle minimiert, bevorzugt verhindert. Eine Dimension des Spaltes wird ein Fachmann an die baulichen Gegebenheiten des Verdichters bzw. der Labyrinthdichtung in einer ihm bekannten Weise anpassen.

Es ist vorteilhaft, wenn der radiale Spalt zwischen der Welle und dem Schließmittel eine radiale Erstreckung aufweist, die zumindest doppelt so breit ist wie eine radiale Erstreckung des Spalts zwischen dem Labyrintheinsatz bzw. dessen Labyrinthspitzen und der Welle. Dadurch kann sichergestellt werden, dass im Normalbetrieb das Schließmittel wirkungslos bzw. funktionslos bleibt, wodurch vorteilhaft eine hohe Prozesssicherheit gewährleistet werden kann.

Das Schließmittel ist beispielsweise von einem in Umfangsrichtung um die Welle angeordneten Bauteil gebildet. Hierbei kann die unterschiedliche radiale Spalterstreckung des Spalts zwischen der Welle und dem Schließmittel und des Spaltes zwischen der Welle und dem Labyrintheinsatz besonders einfach realisiert werden, wenn das Schließmittel von einem eigenständigen Bauteil, wie einem sich um die Welle erstreckender Ring bzw. Dichtring, gebildet wird. Dieser separate Dichtring ist vorteilhaft an dem Labyrintheinsatz angeordnet und besonders bevorzugt in eine Ausnehmung eingesetzt, die von dem Labyrintheinsatz und einem Distanzelement, das den Labyrintheinsatz axial fixiert, gebildet wird. Dabei weist der Dichtring eine Form auf, die an eine Form der Ausnehmung in einer Weise angepasst ist, dass zumindest ein Anteil des Dichtrings passgenau an einer Kontur der Ausnehmung anliegt, wodurch das Schließmittel im Normalbetrieb des Verdichters eine definierte Anlageposition einnimmt.

Ferner ist es vorteilhaft, wenn die Wellendichtungsvorrichtung einen Raum aufweist, der an der von der Welle abgewandten Seite des Schließmittels an dieses angrenzt. Besonders bevorzugt wird dieser Raum zumindest zum Teil von der Ausnehmung zwischen dem Labyrintheinsatz und dem Distanzelement begrenzt. Durch die Realisierung des Raums kann konstruktiv einfach eine besonders große Wirkfläche an dem sich in der Ausnehmung befindlichen Schließmittel für den Überdruck angeboten werden.

Eine rasche und prozesssichere Reaktion auf die Druckdifferenz kann vorteilhaft erreicht werden, wenn die Wellendichtungsvorrichtung zumindest ein Verbindungsmittel aufweist über das die Druckdifferenz auf das Schließmittel übertragbar ist. Hierbei kann das Verbindungsmittel jede dem Fachmann für geeignet erscheinende Ausgestaltung aufweisen, wie beispielsweise ein Stößel, ein Getriebe, ein Sensor mit Aktuator und/oder insbesondere ein Ausnehmung.

Zudem wird vorgeschlagen, dass die Wellendichtungsvorrichtung zumindest einen Verbindungskanal aufweist, der den Raum, der an der von der Welle abgewandten Seite des Schließmittels an dieses angrenzt, mit einem Prozessgasraum verbindet, wodurch das Prozessgas bzw. der Druck (p_{PG}) des Prozessgases direkt und damit besonders effektiv auf das Schließmittel einwirken kann. Zudem ist diese Ausgestaltung besonders Gewichts arm und Kosten günstig.

Der Verbindungskanal kann an jeder, dem Fachmann für zweckdienlich erscheinenden Position angeordnet sein. Zweckmäßigerweise ist er jedoch insbesondere in dem um die Welle angeordneten Bauteil ausgebildet und/oder in dem Labyrintheinsatz. Dadurch kann eine direkte und zudem Platz sparende Verbindung des Schließmittels und des Prozessraums realisiert werden.

In einer alternativen Ausgestaltung der Erfindung wird vorgeschlagen, dass das Schließmittel einstückig mit dem Labyrintheinsatz ausgebildet ist. In diesem Zusammenhang soll unter dem Begriff "einstückig" insbesondere "aus einem Guss gebildet" und/oder "als ein Bauteil ausgebildet" verstanden werden, also dass das Schließmittel und der Labyrintheinsatz von demselben Bauteil gebildet sind. Durch die einstückige Ausbildung können vorteilhaft Kosten und Bauraum eingespart werden.

Des Weiteren kann es vorteilhaft sein, wenn das Schließmittel zumindest ein Mittel und/oder eine Ausformung, wie beispielsweise ein Einschluss mit anderen Materialeigenschaften wie das Material des Schließmittels und/oder ein Einschnitt und/oder einer Ausnehmung und/oder eine andere, dem Fachmann als sinnvoll erscheinende Ausgestaltung, aufweist, die dazu vorbereitet ist, eine Steifigkeit des Schließmittels in Richtung der Welle zu schwächen. Unter der Wendung "Schwächung einer Steifigkeit in Richtung der Welle" soll hier insbesondere eine Reduzierung des Widerstands des Schließmittels gegen seine Verformung in Richtung der Welle durch eine Kraft verstanden werden, die beispielsweise durch die Druckdifferenz bewirkt wird. Bei einer Ausgestaltung als Einschnitt bzw. Kerbe und/oder mehrerer Einschnitte kann die Steifigkeit konstruktiv einfach beeinflusst bzw. angepasst werden.

Vorteilhafterweise weist das Schließmittel "Notlaufeigenschaften" auf, wobei in diesem Zusammenhang unter einer "Notlaufeigenschaft" verstanden werden soll, dass das Schließmittel im auf die Welle gepressten Zustand, also dem Schadensfall des Dichtungssystems und dem Druckabfall des Dichtgases eine begrenzte Zeit, wie beispielsweise bei einer Notabschaltung des Verdichters, die Zeit bis die Welle still steht, seine ihm bestimmte Aufgabe, hier das Abdichten des Radialspalts und das Unterbinden bzw. Verhindern des Austritts des Prozessgases aus dem Prozessgasraum, erfüllt. Ferner soll hierbei die Welle wenig bis gar nicht beschädigt werden. Besonders geeignet sind hier Materialien, die einen niedrigen Reibungskoeffizienten aufweisen, wie insbesondere ein Weißmetall, bspw. Bronze, ein Kunststoff, bspw. Teflon, Aluminium, ein Elastomer, ein Gummi und/oder ein anderes, dem Fachmann für zweckdienlich erscheinendes Material. Mittels der Notlaufeigenschaft kann das Schließmittel als besonders zuverlässig ausgestaltet werden.

Bevorzugt hat das Schließmittel zumindest eine Schicht, die Notlaufeigenschaften aufweist. Diese Schicht kann mittels jeder, dem Fachmann als sinnvoll erscheinende Verbindungsart, insbesondere mittels eines Stoffschlusses, wie beispielsweise Schweißen, Löten und/oder Kleben, an dem Schließmittel angebracht sein und zwar insbesondere im montierten Zustand des Schließmittels an einer zur Welle weisenden Seite des Schließmittels. Hierbei kann die Schicht auch nur an einzelnen Bereichen angeordnet sein, insbesondere einem Bereich, der beim Schließen des Schließmittels mit der Welle in direkten Kontakt kommt. Somit kann die Schicht auch einstückig mit dem Schließmittel ausgeführt sein, wobei unter "einstückig" verstanden werden soll, dass das Schleißmittel und die Schicht nur unter Funktionsverlust zumindest eines der Bauteile voneinander getrennt werden können.

Ferner wird vorgeschlagen, dass das Schließmittel aus einem elastischen Werkstoff besteht. Hierbei kann das vollständige Schließmittel aus dem elastischen Werkstoff gefertigt sein, oder auch nur ein Teil des Schließmittels. Unter einem "elastischen Werkstoff" soll hier insbesondere ein Werkstoff, wie ein Kunststoff, ein Elastomer und/oder ein Gummi, verstanden werden, der unter einer Krafteinwirkung, wie bspw. einem Druck, seine Form verändert und bei Wegfall der einwirkenden Kraft in die Ursprungsform zurückkehrt. Durch die Ausgestaltung aus einem elastischen Werkstoff kann das Schließmittel konstruktiv einfach zur Verfügung gestellt werden.

Es wird zudem vorgeschlagen, dass das Schließmittel aus zumindest zwei Werkstoffen gebildet ist, die in einer Umfangsrichtung alternierend angeordnet sind. Die beiden Werkstoffe weisen vorteilhafterweise unterschiedliche Elastizitäten auf, wobei ein Werkstoff bevorzugt nahe zu keine bis gar keine Elastizität aufweist. Ein prozentualer Anteil an dem Schließmittel des Werkstoffs mit der höheren Elastizität sollte gegenüber dem Anteil des unelastischen Werkstoffs geringer sein als letzterer. Mittels der erfindungsgemäßen Ausführung kann ein Schließmittel bereitgestellt werden, dass zusätzlich zu seiner Verformbarkeit eine prozesssichere Robustheit aufweist.

Eine bevorzugte Weiterbildung besteht darin, dass das Schließmittel ein Federring ist. Hierbei soll unter einem "Federring" jede, dem Fachmann als zweckdienlich erscheinende Ausgestaltung einer Ringform mit einem sich in Umfangsrichtung der Ringform erstreckenden Spalt verstanden werden. Mittels der Federringausgestaltung kann ein kostengünstiges Schließmittel bereitgestellt werden.

In einer alternativen Ausgestaltung der Erfindung weist die Wellendichtungsvorrichtung eine Schräge auf, die zum Entlanggleiten und Komprimieren des Schließmittels bei dem schließauslösenden Druckunterschied vorbereitet bzw. ausgeführt ist. Unter eines "Schräge" soll hier insbesondere eine Neigung zwischen 10° und 85°, bevorzugt zwischen 65° und 30° und besonders bevorzugt zwischen 40° und 55° gegenüber einer Achse der Welle verstanden werden. Durch die Schräge kann eine Kraftkomponente in einer diagonalen Richtung relativ zur Achse der Welle bereitgestellt werden, wodurch das Schließmittel entlang der Schräge einfach komprimierbar ist.

Vorteilhafterweise ist für die Wellendichtungsvorrichtung zumindest ein Dichtelement vorgesehen, das unmittelbar d.h. mit einer direkten Kontaktfläche zum Schließmittel am Schließmittel angeordnet ist. Das Dichtelement ist bevorzugt zum Abdichten eines Raums, der an einer von der Welle abgewandten Seite des Schließmittels angeordnet ist, gegen einen Raum, der an einer der Welle zugewandten Seite des Schließmittels angeordnet ist, ausgeführt. Vorteilhafterweise ist das Dichtelement als ein O-Ring und/oder ein Teflonelement ausgebildet. Grundsätzlich wäre jedoch jede andere, dem Fachmann für zweckdienlich erscheinende Ausgestaltung denkbar. Mittels des Dichtelements kann ein Durchtritt von Prozessgas durch die Ausnehmung, in der das Schließmittel schwimmend gelagert ist, konstruktiv einfach verhindert werden, wodurch ein Schließmechanismus komplikationslos funktioniert.

Des Weiteren ist es vorteilhaft, wenn das Schließmittel in axialer Richtung zumindest eine Schräge aufweist, die mit einer Schräge eines Stützmittels zum Entlanggleiten und Komprimieren des Schließmittels bei dem schließauslösenden Druckunterschied Δp korrespondiert, wodurch die Wellendichtungsvorrichtung Platz und Kosten sparend realisiert werden kann.

Zudem wird vorgeschlagen, dass die Wellendichtungsvorrichtung zumindest ein Stützmittel aufweist. In diesem Zusammenhang soll unter einem "Stützmittel" insbesondere ein Mittel verstanden werden, das eine Position des Schließmittels bestimmt und/oder beeinflusst bzw. dieses zumindest radial fixiert. Dies kann konstruktiv besonders einfach erfolgen, wenn das Stützmittel eine zur Schräge des Schließmittels korrespondierende Schräge aufweist. Dadurch kann eine Stauchung des Schließmittels vorteilhaft kontrolliert erfolgen.

Die Erfindung wird anhand von Ausführungsbeispielen näher erläutert, die in den Zeichnungen dargestellt sind.

Es zeigen:
- FIG 1: einen Teil eines Turbokompressors in einer schematischen Darstellung mit einer erfindungsgemäßen Wellendichtungsvorrichtung,
- FIG 2: die Wellendichtungsvorrichtung der FIG 1 in einem normalen Betriebszustand,
- FIG 3: die Wellendichtungsvorrichtung der FIG 1 bei einem Schadensfall,
- FIG 4: ein alternatives Schließmittel ausgeführt als Dichtring mit einer gestuften Außenkontur,
- FIG 5: eine weitere alternative Ausgestaltung des Schließmittels als Dichtring aus zwei Werkstoffen,
- FIG 6: eine dritte alternative Ausgestaltung des Schließmittels als Federring,
- FIG 7: eine alternative Ausgestaltung einer Wellendichtungsvorrichtung in einem normalen Betriebszustand,
- FIG 8: die Wellendichtungsvorrichtung der FIG 7 bei einem Schadensfall,
- FIG 9: eine dritte Wellendichtungsvorrichtung mit einem Labyrintheinsatz als Schließmittel,
- FIG 10: eine vierte Wellendichtungsvorrichtung mit einem Labyrintheinsatz als Schließmittel in einem normalen Betriebszustand,
- FIG 11: die Wellendichtungsvorrichtung der FIG 10 bei einem Schadensfall und
- FIG 12: einen Schnitt durch das Schließmittel und ein Stützmittel entlang der Linie XII - XII in FIG 10.

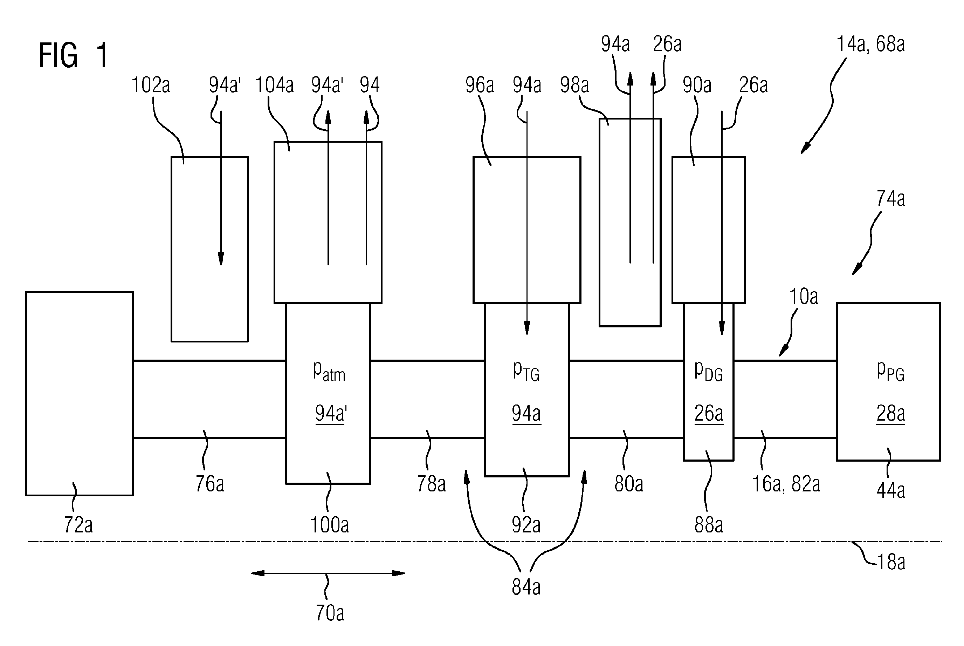

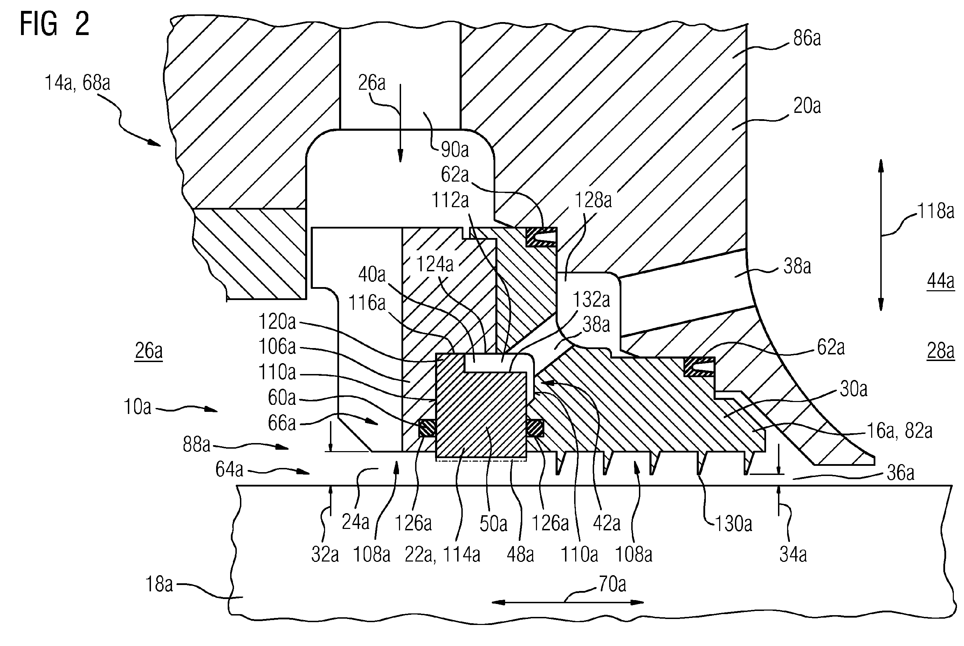

FIG 1 zeigt eine schematische Darstellung eines sich an einem Ende einer Welle 18a befindlichen Teils eines Verdichters 14a in der Form eines Radialverdichters bzw. eines Turbokompressors 68a. In einer axialen Richtung 70a zwischen einem Lagerraum 72a, in dem ölgeschmierte, hier nicht näher dargestellte Komponenten angeordnet sind, und einem Prozessgasraum 44a ist ein Dichtungssystem 74a angeordnet. Das Dichtungssystem 74a weist in Richtung des Prozessgasraums 44a axial hintereinander eine Lagerdichtung 76a, eine Außendichtung 78a, eine Innendichtung 80a und eine Wellendichtungsvorrichtung 10a auf. Die Wellendichtungsvorrichtung 10a weist eine Dichtung 16a in der Form einer Reingaslabyrinthdichtung 82a auf, die zwischen der Welle 18a und einem um die Welle 18a angeordneten Bauteil 20a in der Form eines Außengehäuses 86a des Verdichters 14a ausgebildet ist (siehe FIG 2). Die Außendichtung 78a und die Innendichtung 80a sind baugleich als Labyrinthdichtungen ausgeführt und bilden eine Tandemgasdichtung 84a.

Das Dichtsystem 74a dient zu einer Verhinderung eines Übertritts von Prozessgas 28a, beispielsweise in der Form von Sauerstoff, in den Lagerraum 72a. Hierfür werden an mehreren Stellen 90a, 96a, 102a des Dichtsystems 74a Gase 26a, 94a, 94' mit unterschiedlichen Drücken p_{DG}, p_{TG} zugeführt. Das Prozessgas 28a im Prozessgasraum 44a hat einen Druck p_{PG} von beispielsweise 100 bar, die an der Wellendichtungsvorrichtung 10a bzw. der Dichtung 16a anliegen. Hierbei ist generell jedoch ein Betrieb des Verdichters 14a mit jedem anderen Druck denkbar. Der Fachmann wird den Druckbereich selbstständig an die Gegebenheiten des verwendeten Verdichters 14a bzw. Dichtungssystems 74a anpassen. Der Prozessgasraum 44a wird von der Dichtung 16a von einem Reingasraum 88a, der in Richtung des Lagerraums 72a vor der Dichtung 16a angeordnet ist, getrennt.

In diesen Reingasraum 88a wird ein Dichtgas 26a, das gereinigtem Prozessgas 28a entspricht, mit einem Druck p_{DG} über eine Zuführleitung 90a zugeführt, der einen niedrigen Druckunterschied Δp gegenüber dem Prozessgasdruck p_{PG} aufweist. Hierbei wird ein Druck p_{DG} und eine Menge an Dichtgas 26a so gewählt, dass ein Gasstrom über die Dichtung 16a eine Geschwindigkeit von 20 m/sec aufweist. Generell wäre hier auch jede andere, dem Fachmann für zweckdienlich erscheinende Geschwindigkeit wie beispielsweise eine zwischen 5 und 40 m/sec denkbar. Der Druck p_{DG} beträgt beispielsweise 100,5 bar, wodurch 0,5 bar im Reingasraum 88a an der Dichtung 16a anliegen. An den Reingasraum 88a schließt sich in Richtung des Lagerraums 72a die Innendichtung 80a an, an der somit ca. 100,5 bar anliegen. Auf einer in Richtung des Lagerraums 72a weisenden Seite der Innendichtung 80a befindet sich ein Zuführraum 92a, dem ein Trenngas 94a, beispielsweise N₂, mit einem Druck p_{TG} von 2-3 bar über eine Zuführleitung 96a zugeführt wird. Hier besteht somit ein Druckunterschied Δp von ca. 98 bar zwischen dem Reingasraum 88a und dem Zuführraum 92a. Somit wird ein Übertritt von Dichtgas 26a durch die Innendichtung 80a weitgehend unterbunden. Ein restlicher Anteil an übergetretenem Dichtgas 26a wird mit dem eingespülten Trenngas 94a über eine Abführleitung 98a, die axial zwischen der Zuführleitung 96a und der Zuführleitung 90a angeordnet ist, ausgespült.

An den Zuführraum 92a schließt sich in Richtung des Lagerraums 72a die Außendichtung 78a an, an der 2-3 bar Überdruck gegenüber einer Entlüftungskammer 100a anliegen. Durch die baugleiche Ausgestaltung der Außendichtung 78a mit der Innendichtung 80a ist hier sichergestellt, dass bei einem Defekt der Innendichtung 80a auch die Außendichtung 78a dem Druck von 100 bar standhalten kann. Auf einer in Richtung des Lagerraums 72a weisenden Seite der Außendichtung 78a befindet sich die Entlüftungskammer 100a in der im Wesentlichen atmosphärischer Druck pₐₜₘ herrscht. In die Entlüftungskammer 100a wird weiteres Trenngas 94a' im Bereich der Lagerdichtung 76a, die axial zwischen der Entlüftungskammer 100a und dem Lagerraum 72a angeordnet ist, über eine Zuführleitung 102a eingeleitet. Trenngas 94a das über die Außendichtung 78a in die Entlüftungskammer 100a gelangt wird mit dem zugeführten Trenngas 94a' über eine Entlüftungsleitung 104a ausgespült. Somit dient auch das Trenngas 94a dazu einem Übertritt von Dichtgas 26a und damit auch Prozessgas 28a in den Lagerraum 72a entgegen zu wirken.

In FIG 2 ist die Wellendichtungsvorrichtung 10a in einer schematischen Detailzeichnung bei einem normalen Betrieb des Verdichters 14a gezeigt. Zwischen der Welle 18a und dem um die Welle 18a angeordneten Bauteil 20a, dem Außengehäuse 86a, ist eine Dichtung 16a angeordnet, die von einem Labyrintheinsatz 30a der Reingaslabyrinthdichtung 82a gebildet ist. Der Labyrintheinsatzes 30a ist im Außengehäuse 86a gelagert und wird von einem Distanzelement 106a in der Form eines sich um die Welle 18a erstreckenden Rings axial fixiert.

In jeweils einem in Richtung der Welle 18a weisenden Endbereich 108a des Labyrintheinsatzes 30a und des Distanzelements 106a ist jeweils ein Ausschneidung 110a eingebracht, die im montierten Zustand eine Ausnehmung 112a bilden. In diese Ausnehmung 112a ist ein Schließmittel 22a eingesetzt. Das Schließmittel 22a ist von einem separat von dem Labyrintheinsatz 30a ausgebildeten Dichtrings 114a in der Form eines Elastomerrings gebildet, wodurch das Schließmittel 22a aus einem elastischen Werkstoff 50a besteht. Der Dichtring 114a weist an seinem Außenumfang 116a einen sich in radialer Richtung 118a nach Außen erstreckenden Bund 120a auf, wobei der Bund 120a eine geringere axiale Breite aufweist wie der Dichtring 114a. Der Bund 120a stellt einen Anteil des Dichtrings 114a dar, der passgenau an einer Winkelkontur 122a der Ausnehmung 112a anliegt, wodurch das Schließmittel 22a im Normalbetrieb des Verdichters 14a eine definierte Anlageposition einnimmt. Mittels des Bunds 120a wird zwischen dem Schließmittel 22a bzw. dem Dichtring 114a und einer Begrenzung 124a der Ausnehmung 112a des Labyrintheinsatzes 30a bzw. des Distanzelements 106a ein Raum 40a gebildet, der an der von der Welle 18a abgewandten Seite 42a des Schließmittels 22a an dieses angrenzt.

Des Weiteren ist radial um das Schließmittel 22a und parallel zur Achse der Welle 18a, ein Dichtelement 60a, ausgeführt als ein O-Ring, in Aussparungen 126a des Labyrintheinsatzes 30a und des Distanzelements 106a eingepasst. Das Dichtelement 60a dient zum Abdichten des Raums 40a gegen einen Raum 64a, der an einer der Welle 18a zugewandten Seite 66a des Schließmittels 22a angeordnet ist. Zudem sind an dem Labyrintheinsatz 30a zwei weitere Dichtelemente 62a angeordnet, die sich im Bereich des Labyrintheinsatzes 30a befindlichen Gasräume 40a, 44a, 64a gegeneinander abdichten.

Ferner weist die Wellendichtungsvorrichtung 10a ein Verbindungsmittel in der Form einer Ausnehmung bzw. eines Verbindungskanals 38a zum Verbinden des Raums 40a mit dem Prozessgasraum 44a auf. Der Verbindungskanal 38a erstreckt sich ausgehend von Raum 40a durch den Labyrintheinsatz 30a und das Bauteil 20a bzw. das Außengehäuse 86a, wobei zwischen dem Labyrintheinsatz 30a und dem Außengehäuse 86a ein konstruktionsbedingter Verbindungsraum 128a ist.

Der Labyrintheinsatz 30a ist so im Außengehäuse 86a gelagert, dass zwischen seinen in Richtung der Welle 18a weisenden Enden von Labyrinthspitzen 130a und der Welle 18a ein Spalt 36a bzw. ein Radialspalt von ca. 0,1 - 0,4 mm gebildet ist. Das Schließmittel 22a bzw. der Dichtring 114a ist wiederum so in die Ausnehmung 112a eingesetzt bzw. so dimensioniert, dass im Normalbetrieb des Verdichters 14a, in dem der Druck p_{DG} des Dichtgases 26a größer ist als der Druck p_{PG} des Prozessgases 28a, zwischen der Welle 18a und dem Schließmittel 22a ein radialer Spalt 24a ist. Der Spalt 24a ist in seiner radialen Erstreckung 32a zumindest doppelt so breit wie eine radiale Erstreckung 34a des Spalts 36a zwischen dem Labyrintheinsatz 30a bzw. dessen Labyrinthspitzen 130a und der Welle 18a.

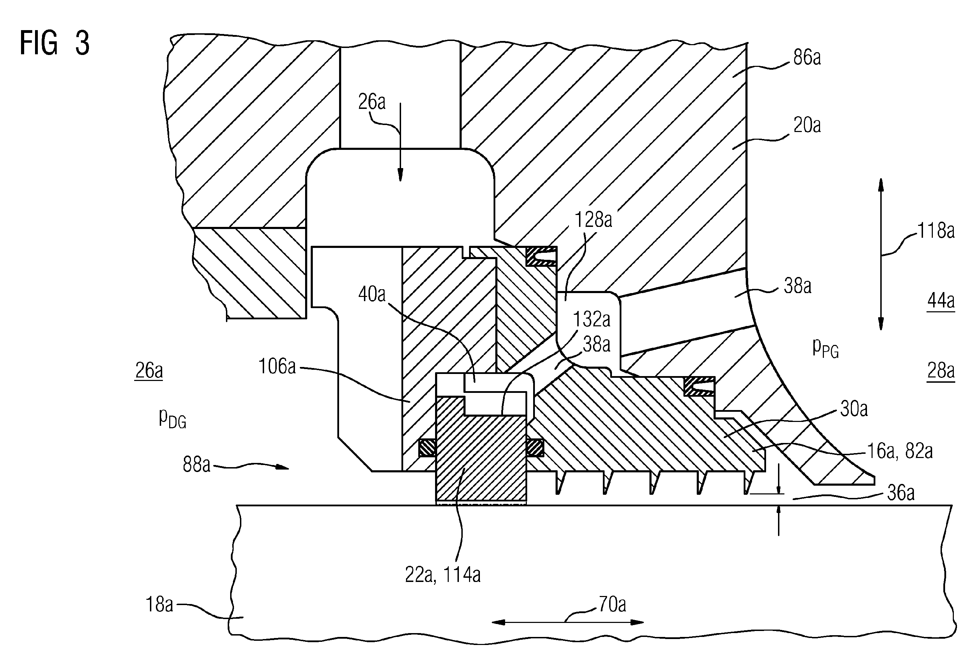

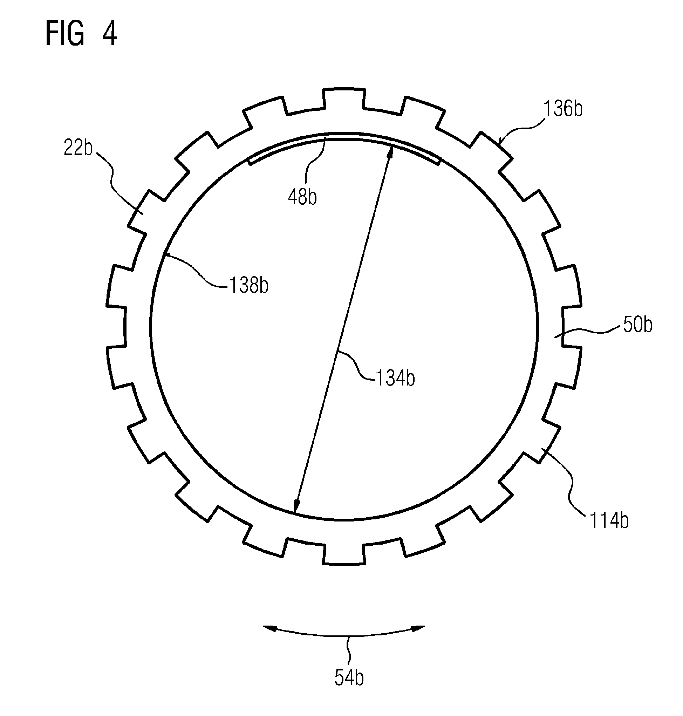

Das Schließmittel 22a ist dazu vorbereitet, bei einem Druckunterschied Δp über die Dichtung 16a selbsttätig zu schließen, wie dies in FIG 3 zu sehen ist. Dieser Druckunterschied Δp stellt sich beispielsweise bei einem Defekt der Tandemgasdichtung 84a und einer daraufhin ausgelösten Notabschaltung des Turbokompressors 68a ein. Hierbei fällt der Druck p_{DG} des Dichtgases 26a im Reingasraum 88a auf der lagerseitigen Seite der Dichtung 18a beispielsweise auf 5 bar, da das Dichtgas 26a über die Innen- und die Außendichtung 78a, 80a entweicht. Der Druckunterschied Δp zwischen dem Druck p_{DG} des Dichtgases 26a und dem Druck p_{PG} des Prozessgases 28a beträgt somit ca. 95 bar und dieser Überdruck p_{PG} des Prozessgases 28a wirkt von dem Prozessgasraum 44a durch den Verbindungskanal 38a auf eine Wirkfläche 132a des Schließmittels 22a. Dies bewirkt eine Stauchung des Schließmittels 22a und eine Verringerung seines Innendurchmessers 134a (vgl. FIG 4), wodurch sich das Schließmittel 22a in den Spalt 24a bewegt und diesen schließt. Dadurch wird ein Gasstrom über die Dichtung 18a unterbunden. Um eine Beschädigung der Welle 18a zu minimieren oder zu verhindern, weist der Werkstoff 50a des Schließmittels 22a Notlaufeigenschaften auf.

Alternativ, wie dies gestrichelt dargestellt ist, kann das Schließmittel 22a bzw. der Dichtring 114a an seiner wellenseitigen Seite zusätzlich eine Notlaufeigenschaften aufweisende Schicht 48a, beispielsweise aus Teflon, aufweisen. Um eine Verformbarkeit des Dichtrings 114a zu erreichen, ist die Schicht 48a nur dort angeordnet, wo das Schließmittel 22a während der Notabschaltung mit der Welle 18a in Kontakt kommt. Vorteilhafterweise kann hier für das Material des Dichtrings 114a ein Material ohne Notlaufeigenschaften ausgesucht werden.

In den FIG 4 bis 9 sind alternative Ausführungsbeispiele der Wellendichtungsvorrichtung 10a bzw. des Schließmittels 22a dargestellt. Im Wesentlichen sind gleich bleibende Bauteile, Merkmale und Funktionen grundsätzlich mit den gleichen Bezugszeichen beziffert. Zur Unterscheidung der Ausführungsbeispiele sind jedoch den Bezugszeichen der Ausführungsbeispiele die Buchstaben a bis f hinzugefügt. Die nachfolgende Beschreibung beschränkt sich im Wesentlichen auf die Unterschiede zu dem Ausführungsbeispiel in den FIG 1 bis 3, wobei bezüglich gleich bleibender Bauteile, Merkmale und Funktionen auf die Beschreibung des Ausführungsbeispiels in den FIG 1 bis 3 verwiesen werden kann.

In der FIG 4 ist ein alternatives Schließmittel 22b zum selbsttätigen Schließen bei einem Druckunterschied Δp über eine Dichtung 16b gezeigt. Das Schließmittel 22b ist in eine Dichtung 16b einer Wellendichtungsvorrichtung 10b eines Verdichters 14b mit einer Welle 18b und einem um die Welle 18b angeordneten Bauteil 20b einsetzbar. Die Komponenten 10b-20b sind hier nicht dargestellt, sind jedoch analog zu der Ausführung der FIG 1 bis 3 ausgeführt. Das Schließmittel 22b ist als Dichtring 114b ausgebildet, aus einem elastischen Werkstoff 50b gefertigt und weist in Umfangsrichtung 54b eine gestufte Außenkontur 136b auf, wodurch eine gute Verformbarkeit durch eine Reduzierung eines Innendurchmessers 134b des Dichtrings 114b bei gleichzeitig exakter Positionierung in einer Ausnehmung 112b eines Labyrintheinsatzes 30b bzw. eines Distanzelements 106b erreicht wird (nicht gezeigt). Das Schließmittel 22b bzw. der Dichtring 114b weist an seiner Innenkontur 138b, wie analog zu FIG 3 beschrieben ist, eine Schicht 48b aus Teflon auf, die Notlaufeigenschaften aufweist.

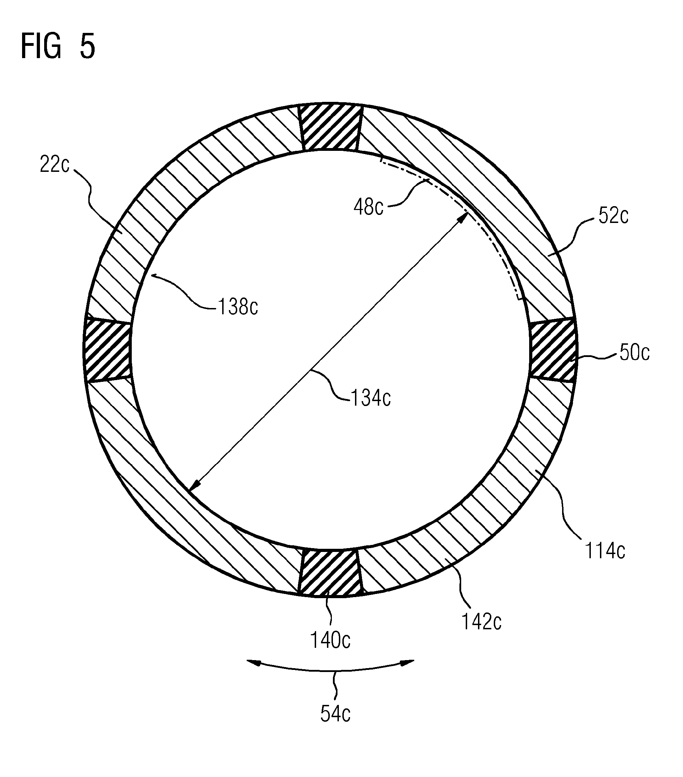

Die FIG 5 zeigt ein weiteres alternatives Schließmittel 22c zum selbsttätigen Schließen bei einem Druckunterschied Δp über eine Dichtung 16c. Das Schließmittel 22c ist analog zu den Ausführungen der FIG 1-3 einsetzbar. Das Schließmittel 22c ist aus zwei Werkstoffen 50c, 52c gebildet, die in einer Umfangsrichtung 54c alternierend angeordnet sind. Hierbei sind vier Bereiche 140c aus Werkstoff 50c in regelmäßigen Abständen über den Umfang verteilt angeordnet. In Umfangsrichtung 54c zwischen zwei Bereichen 140cc ist je eine Bereich 142c aus Werkstoff 52c angeordnet. Generell wäre auch eine unsymmetrische Anordnung und/oder jede andere, dem Fachmann für zweckdienlich erscheinende Abfolge der Bereiche 140c, 142c denkbar. Grundsätzlich wären auch mehr als zwei Werkstoffe denkbar.

Werkstoff 50c ist aus einem elastischen Werkstoff, wie beispielsweise einem Elastomer, gebildet und Werkstoff 52c aus einem Werkstoff mit einer geringeren bis gar keinen Elastizität, wie beispielsweise Bronze. Die Dimensionen bzw. die Stauchbarkeit der Bereiche 140c sind so ausgelegt, dass sich ein Innendurchmesser 134c des Dichtrings 114c so verringert, dass eine Innenkontur 138c des Schließmittels 22c im Fall der Notabschaltung an der Welle 18c anliegt. Hierfür weist der Bereich 142c auch einen Werkstoff mit Notlaufeigenschaften auf oder zumindest eine hier nur angedeutete Schicht 48c eines Werkstoffs mit Notlaufeigenschaften.

In einer hier nicht gezeigten Ausführung der Erfindung wäre es auch denkbar ein Schließmittel aus zwei einen Ring bildenden Halbringen zu bilden, wobei die jeweils korrespondierenden Enden der Halbringe mit Federn verbunden sind. In einem normalen Betriebszustand eines Verdichters sind die beiden mit Federn verbundenen Halbringe mit einer ovalen Gestalt um eine Welle angeordnet.

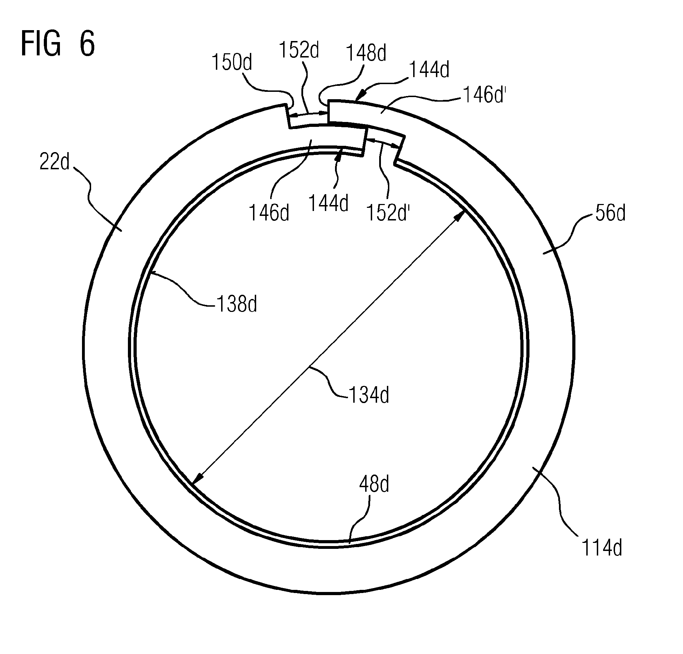

In der FIG 6 ist ein drittes alternatives Schließmittel 22d zum selbsttätigen Schließen bei einem Druckunterschied Δp über eine Dichtung 16d gezeigt. Das Schließmittel 22d ist analog zu den Ausführungen der FIG 1-3 einsetzbar. Das als Dichtring 114d ausgebildete Schließmittel 22d ist ein Federring 56d. An seinen offenen Enden 144a weist der Federring 56d je einen Endabschnitt 146d, 146d' auf, die in ihrer radialen Breite reduziert sind. Die beiden Endabschnitte 146d, 146d' sind so angeordnet, dass sie sich zum Teil überlappen. Zwischen einem Ende 148d des Endabschnitts 146d' und einem Anfang 150d des korrespondierenden Endabschnitts 146d ist ein Spalt 152d gebildet. Analog hierzu ist ein korrespondierender Spalt 152d' vorhanden. Wird das Schließmittel 22d bzw. der Federring 56d durch einen Überdruck p_{PG} eines Prozessgases 28d gestaucht, wird der Spalt 152d, 152d' verringert bzw. geschlossen. Dadurch wird ein Innendurchmesser 134d des Schließmittels 22d reduziert und eine Innenkontur 138d des Schließmittels 22d liegt im Fall der Notabschaltung an der Welle 18d an. Um eine Beschädigung der Welle 18d zu minimieren oder zu verhindern, weist der Federring 56d eine Schicht 48d aus einem Werkstoff mit Notlaufeigenschaften, wie Teflon, auf.

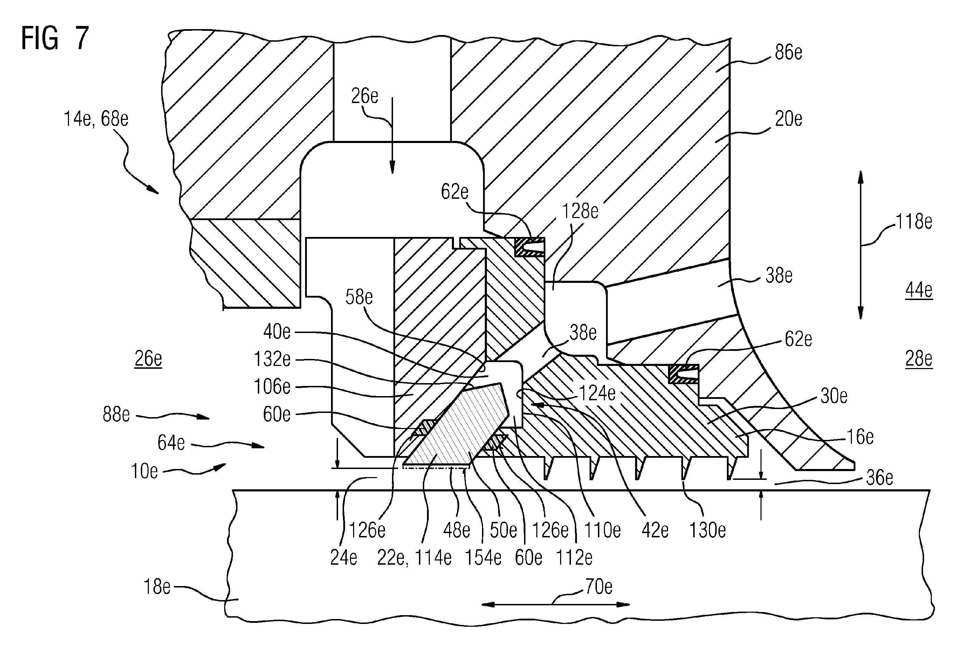

Die FIG 7 zeigt eine alternative Wellendichtungsvorrichtung 10e eines Verdichters 14e bzw. eines Turbokompressors 68e mit einer Welle 18e und einem um die Welle 18e angeordneten Bauteil 20e in einem Normalbetrieb. Die Wellendichtungsvorrichtung 10e weist eine Dichtung 16e mit einem Labyrintheinsatz 30e auf, der von einem Distanzelement 106e axial am als Außengehäuse 86e ausgeführten Bauteil 20e fixiert ist.

Das Distanzelement 106e weist einer zur Welle 18e weisenden Seite eine Schräge 58e zum Entlanggleiten und Komprimieren des Schließmittels 22e bei einem schließauslösenden Druckunterschied Δp auf. Die Schräge 58e und eine Ausschneidung 110e im Labyrinthelement 30e bilden eine Ausnehmung 112e, in der ein Schließmittel 22e aufgenommen ist. Das Schließmittel 22e ist von einem Dichtring 114e aus einem elastischen Werkstoff 50e gebildet. Der Dichtring 114 weist einen fünfeckigen Querschnitt auf, wobei eine zur Welle 18e weisende Fläche 154e parallel zu einer Achse der Welle 18e ausgerichtet ist. Zwischen der Fläche 154e und der Welle 18e ist ein Spalt 24e ausgebildet. An der von der Welle 18e abgewandten Seite 42e des Schließmittels 22e grenzt ein Raum 40e an das Schließmittel 22e an, der zudem von einer Begrenzung 124e der Ausnehmung 112e des Labyrintheinsatzes 30e begrenzt wird. Des Weiteren sind in den Labyrintheinsatz 30e und das Distanzelement 106e Aussparungen 126e ausgebildet, die mit unterschiedlichem radialem Abstand zur Achse der Welle 18e angeordnet sind. In die Aussparungen 126e ist je ein Dichtelement 60e aus Teflon eingepasst, das zum Abdichten des Raums 40e gegen einen Raum 64e dient.

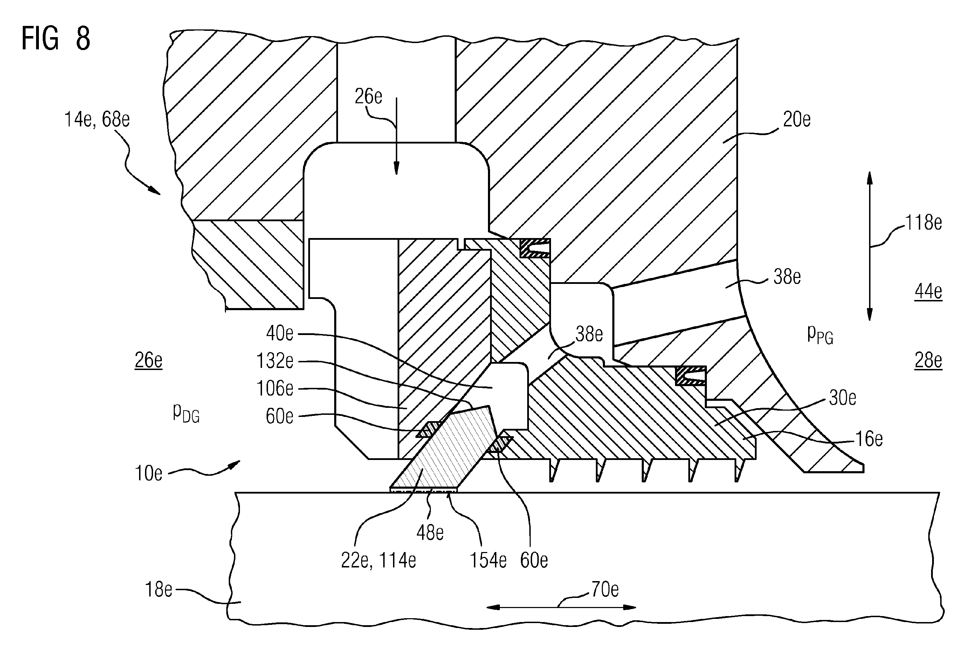

Stellt sich bei einer Notabschaltung des Turbokompressors 68e ein Überdruck p_{PG} des Prozessgases 28e in einem Prozessgasraum 44e ein, wirkt dieser von dem Prozessgasraum 44e durch einen Verbindungskanal 38e und den Raum 40e auf eine Wirkfläche 132e des Schließmittels 22e. Das Schließmittel 22e zum selbsttätigen Schließen bei einem Druckunterschied Δp über die Dichtung 16e wird durch den Überdruck p_{PG} und die Schräge 56e verformt bzw. komprimiert und bewegt sich in den Spalt 24e, wie dies in FIG 8 dargestellt ist. Dadurch kommt die Fläche 154e des Schließmittels 22e mit der Welle 18e in Anlage und schließt so den Spalt 24e. Zum Schutz der Welle 18e weist das Schließmittel 22e eine Schicht 48e aus Teflon mit Notlaufeigenschaften auf.

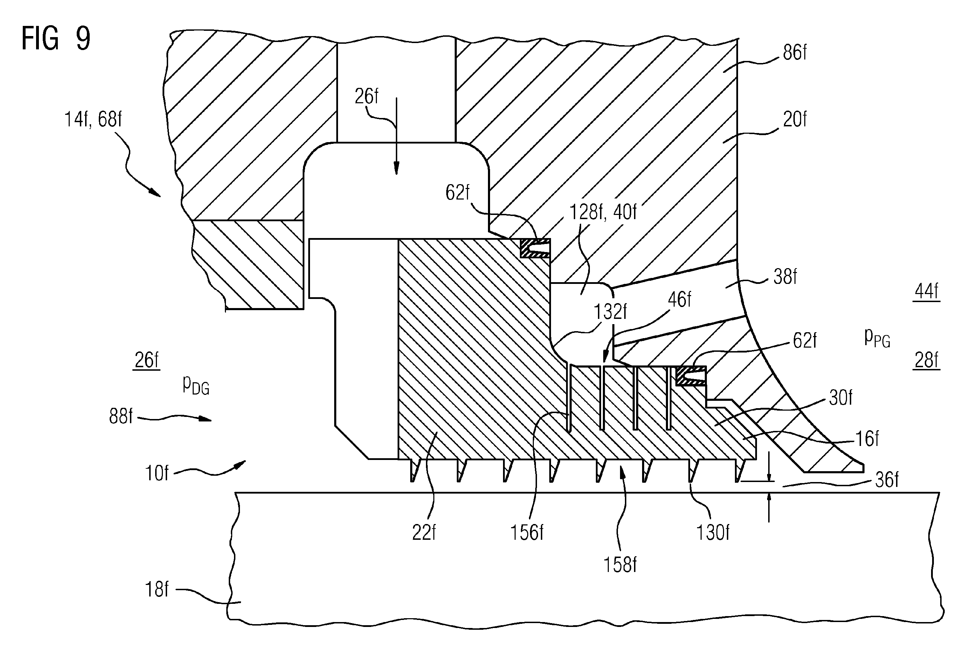

Die FIG 9 zeigt eine dritte Wellendichtungsvorrichtung 10f eines Verdichters 14f mit einer Welle 18f und einem um die Welle 18f angeordneten Bauteil 20f. Die Wellendichtungsvorrichtung 10f weist eine Dichtung 16f mit einem Labyrintheinsatz 30f auf, der als Schließmittel 22f ausgebildet ist. Das Schließmittel 22f ist somit einstückig mit dem Labyrintheinsatz 30f ausgebildet. Das Schließmittel 22f dient zum selbsttätigen Schließen bei einem Druckunterschied Δp über die Dichtung 16f. Hierfür weist das Schließmittel 22f mehrere Ausformungen 46f auf, die dazu vorbereitet ist, eine Steifigkeit des Schließmittels 22f in Richtung der Welle 18f zu schwächen. Die Ausformungen 46f sind von senkrecht zur Welle 18f ausgerichteten Einschnitten 156f im Labyrintheinsatz 30f gebildet, die an einer von der Welle 18f wegweisenden Seite des Labyrintheinsatzes 30f beginnen und zur Welle 18f hin verlaufen.

Bei einem Überdruck p_{PG} eines Prozessgases 28f in einem Prozessgasraum 44f wirkt dieser von dem Prozessgasraum 44f durch einen Verbindungskanal 36f im Außengehäuse 86f und einen Raum 40f auf eine Wirkfläche 132f des Schließmittels 22f. Dadurch wird ein Anteil 158f des Schließmittels 22f, in dem die Einschnitten 156f angeordnet sind, in Richtung der Welle 18f gedrückt, wodurch der Labyrintheinsatz 30f relativ zur Welle 18f eine schräge Ausrichtung einnimmt (nicht gezeigt). Labyrinthspitzen 130f des Schließmittels 22f kommen mit der Welle 18f in Kontakt und ein Spalt 36f, der im Normalbetrieb des Verdichters 18f zwischen den Labyrinthspitzen 130f und der Welle 18f ausgebildet ist, wird geschlossen.

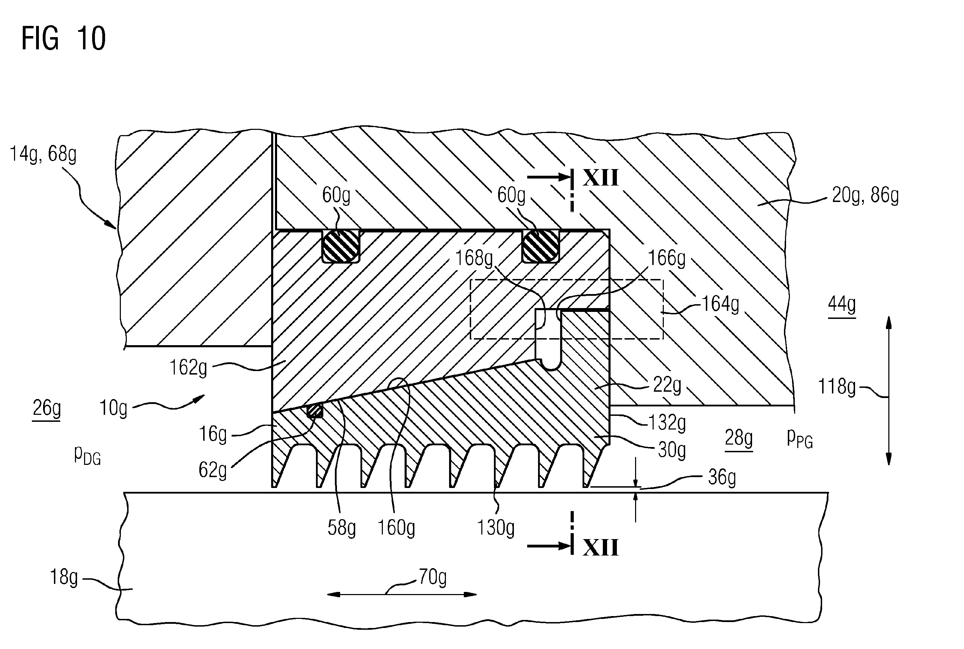

In der FIG 10 ist eine alternative Wellendichtungsvorrichtung 10g eines Verdichters 14g bzw. eines Turbokompressors 68g mit einer Welle 18g und einem um die Welle 18g angeordneten Bauteil 20g, das als Außengehäuse 86g ausgeführt ist, in einem Normalbetrieb gezeigt. Die Wellendichtungsvorrichtung 10g weist eine Dichtung 16g mit einem Labyrintheinsatz 30g auf, der als Schließmittel 22g ausgebildet ist und von einem Stützmittel 162g radial am Bauteil 20g fixiert ist. Im Normalbetrieb, wenn ein Druck p_{DG} eines Dichtgases 26g größer ist als ein Druck p_{PG} eines Prozessgases 28g in einer Prozesskammer 44g, wird das Schließmittel 22g mit seiner Wirkfläche 132g durch den Überdruck Δp an das Außengehäuse 86g gedrückt und so axial fixiert. Ferner besteht ein radialer Spalt 36g zwischen Labyrinthspitzen 130g des Schließmittels 22g und der Welle 18g.

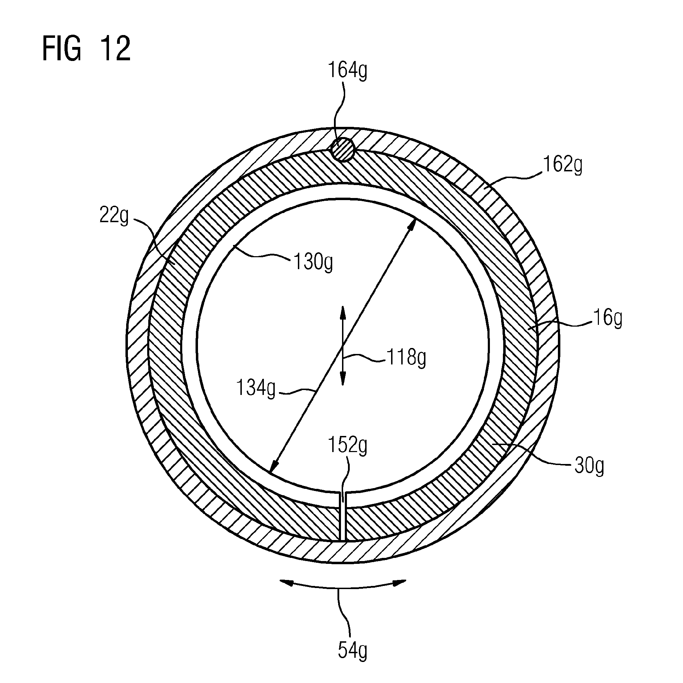

Wie in der FIG 12, die einen Schnitt durch das Schließmittel 22g bzw. das Labyrintheinsatz 30g und das Stützmittel 162g im Wesentlichen entlang der Linie XII - XII in FIG 10 zeigt, dargestellt ist, weist das Schließmittel 22g einen sich in eine Umfangsrichtung 54g erstreckenden Spalt 152g auf. Das Stützmittel 162g schließt sich in einer radialen Richtung 118g außen an das Schließmittel 22g als geschlossener Ring an. Das Schließmittel 22g und das Stützmittel 162g sind von Metallringen gebildet und werden von einem Haltebolzen 164g, der gegenüber des Spalts 152g angeordnet ist, am Außengehäuse 86g rotationsfest fixiert. Ferner weisen das Schließmittel 22g und das Stützmittel 162g eine gleiche axiale Breite auf (vgl. FIG 10).

Am Stützmittel 162g sind zwei Dichtelemente 60g angeordnet, die verhindern, dass zwischen dem Bauteil 20g und dem Stützmittel 162g Prozessgas 28g aus dem Prozessgasraum 44g austritt. Ferner sind die Dichtelemente 60g von einem elastischen Material, wie Gummi, gebildet, wodurch eine Federwirkung erreicht wird, bei der der Labyrintheinsatz 30g und das Stützmittel 162g radial beweglich sind. Dadurch kann im Normalbetrieb des Verdichters 14g ein unbeabsichtigtes und schädliches Anstoßen der Labyrinthspitzen 130g an die Welle 18g abgedämpft werden. Generell wäre es auch möglich, die Dichtelemente 60g aus einem festen Material, wie Teflon, herzustellen, wodurch ein Dichtelement 60a ausreichend ist. Ein weiteres Dichtelement 62g ist zwischen dem Stützmittel 162g und dem Schließmittel 22g angeordnet.

Das Schließmittel 22g weist in axialer Richtung 70g und an einer von der Welle 18g weg weisenden Seite zumindest eine Schräge 160g auf, die mit einer Schräge 58g des Stützmittels 162g korrespondiert. Die Schräge 58g ist an einer zur Welle 18g weisenden Seite des Stützmittels 162g angeordnet und dient zum Entlanggleiten und Komprimieren des Schließmittels 22g bei einem schließauslösenden Druckunterschied Δp.

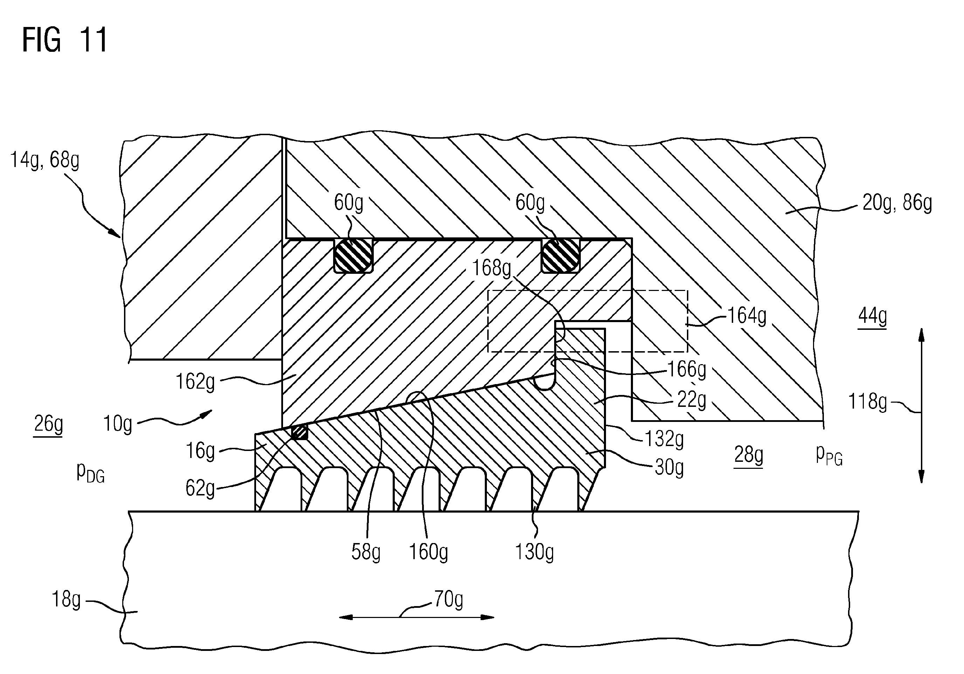

Stellt sich bei einer Notabschaltung des Turbokompressors 68g ein Überdruck p_{PG} des Prozessgases 28g in dem Prozessgasraum 44g ein, wirkt dieser von dem Prozessgasraum 44e auf die Wirkfläche 132g des Schließmittels 22g. Das Schließmittel 22g zum selbsttätigen Schließen beim Druckunterschied Δp über die Dichtung 16g wird durch den Überdruck p_{PG} axial verschoben und dadurch an die bzw. entlang der Schräge 56g gedrückt. Dies führt wiederum zu einer Verformung bzw. radialen Komprimierung des Schließmittels 22g und zu einer Verringerung des Spalts 152g bzw. eines Innendurchmessers 134g des Schließmittels 22g. Das Schließmittel 22g bewegt sich in den Spalt 36g, wodurch ,wie dies in FIG 11 dargestellt ist, die Labyrinthspitzen 130g mit der Welle 18g in Kontakt kommen und den Spalt 36g schließen. Neben der Limitierung der Bewegung des Schließmittels 22g durch den Kontakt mit der Welle 18g kann die Bewegung alternativ und/oder zusätzlich auch durch ein Anstoßen einer Schulter 166g des Schließmittels 22g an einen Absatz 168g des Stützmittels 162g limitiert werden.

## Patentansprüche

1. Verdichter (14a-g) mit einer Wellendichtungsvorrichtung (10a-g) mit zumindest einer Dichtung (16a-g), die zwischen einer Welle (18a-g) und zumindest einem um die Welle (18a-g) angeordneten Bauteil (20a-g) ausgebildet ist und mittels der ein Prozessgasraum (44a-g) im Verdichter (14a-g) mit einem dort unter einem Prozessgasdruck (pPG) stehendem Prozessgas (28a-g) gegen ein Ausströmen des Prozessgases (28a-g) aus dem Verdichter (14a-g) abdichtbar ist,
**gekennzeichnet durch** zumindest ein Schließmittel (22a-g) zum selbsttätigen, **durch** einen Überdruck des Prozessgases (28a-g) bewirkten Schließen bei einem Druckunterschied (Δp) über die Dichtung (16a-g).

2. Verdichter (14a-g) nach Anspruch 1,
**dadurch gekennzeichnet, dass** das Schließmittel (22a-g) zum Schließen eines Spalts (24a-e, 36f, 36g) zwischen der Welle (18a-g) und dem Schließmittel (22a-g) vorbereitet ist, wobei der Spalt (24a-e, 36f, 36g) zumindest in einem Betriebszustand besteht, in dem ein Druck (p_{DG}) eines Dichtgases (26a-g) größer als der Druck (p_{PG}) des Prozessgases (28a-g) ist.

3. Verdichter (14a-g) nach Anspruch 1 oder 2,
**dadurch gekennzeichnet, dass** die Dichtung (18a-e) zumindest einen Labyrintheinsatz (30a-e) aufweist und zwischen der Welle (18a-e) und dem Schließmittel (22a-e) ein radialer Spalt (24a-e) ist, der in seiner radialen Erstreckung (32a-e) zumindest doppelt so breit ist wie eine radiale Erstreckung (34a-e) eines Spalts(36a-e) zwischen dem Labyrintheinsatz (30a-e) und der Welle (18a-e).

4. Verdichter (14a-g) nach einem der vorhergehenden Ansprüche,
**gekennzeichnet durch** zumindest einen Verbindungskanal (38a-f) zum Verbinden eines Raums (40a-f), der an der von der Welle (18a-f) abgewandten Seite (42a-f) des Schließmittels (22a-f) an dieses angrenzt, mit dem Prozessgasraum (44a-f).

5. Verdichter (14a-g) nach einem der vorhergehenden Ansprüche,
**dadurch gekennzeichnet, dass** die Dichtung (16f, 16g) zumindest einen Labyrintheinsatz (30f, 30g) aufweist und das Schließmittel (22f, 22g) einstückig mit dem Labyrintheinsatz (30f, 30g) ausgebildet ist.

6. Verdichter (14a-g) nach einem der vorhergehenden Ansprüche,
**dadurch gekennzeichnet, dass** das Schließmittel (22f) zumindest eine Ausformung (46f) aufweist, die dazu vorbereitet ist, eine Steifigkeit des Schließmittels (22f) in Richtung der Welle (18f) zu schwächen.

7. Verdichter (14a-g) nach einem der vorhergehenden Ansprüche,
**dadurch gekennzeichnet, dass** das Schließmittel (22a-e) zumindest eine Schicht (48a-e) hat, die Notlaufeigenschaften aufweist.

8. Verdichter (14a-g) nach einem der vorhergehenden Ansprüche,
**dadurch gekennzeichnet, dass** das Schließmittel (22a, 22b, 22e) aus einem elastischen Werkstoff (50a, 50b, 50e) besteht.

9. Verdichter (14a-g) nach einem der vorhergehenden Ansprüche,
**dadurch gekennzeichnet, dass** das Schließmittel (22c) aus zumindest zwei Werkstoffen (50c, 52c) gebildet ist, die in einer Umfangsrichtung (54c) alternierend angeordnet sind.

10. Verdichter (14a-g) nach einem der vorhergehenden Ansprüche,
**dadurch gekennzeichnet, dass** das Schließmittel (22d) ein Federring(56d) ist.

11. Verdichter (14a-g) nach einem der vorhergehenden Ansprüche,
**gekennzeichnet durch** eine Schräge (58e, 58g) zum Entlanggleiten und Komprimieren des Schließmittels (22e, 22g) bei dem schließauslösenden Druckunterschied (Δp).

12. Verdichter (14a-g) nach einem der vorhergehenden Ansprüche,
**gekennzeichnet durch** zumindest ein Dichtelement (60a-e, 62af) zum Abdichten eines Raums (40a-f), der an einer von der Welle (18a-f) abgewandten Seite (42a-f) des Schließmittels (22a-f) angeordnet ist, gegen einen Raum (64a-f), der an einer der Welle (18a-f) zugewandten Seite (66a-f) des Schließmittels (22a-f) angeordnet ist.

13. Verdichter (14a-g) nach einem der vorhergehenden Ansprüche,
**dadurch gekennzeichnet, dass** das Schließmittel (22g) in axialer Richtung (70g) zumindest eine Schräge (160g) aufweist, die mit einer Schräge (58g) eines Stützmittels (162g) zum Entlanggleiten und Komprimieren des Schließmittels (22g) bei dem schließauslösenden Druckunterschied (Δp) korrespondiert.

14. Verdichter (14a-g) nach einem der vorhergehenden Ansprüche,
**gekennzeichnet durch** zumindest ein Stützmittel (162g), das eine zur Schräge (160g) korrespondierende Schräge (58g) aufweist und das das Schließmittel (22g) zumindest radial fixiert.

15. Verdichter (14a-g) nach einem der vorhergehenden Ansprüche,
**gekennzeichnet dadurch, dass** der Verdichter (14a-g) ein Turbokompressor (68a-g) ist.

## Claims

1. Compressor (14a-g) with a shaft sealing device (10a-g) with at least one seal (16a-g) which is formed between a shaft (18a-g) and at least one component (20a-g) arranged around the shaft (18a-g) and by means of which a process gas space (44a-g) in the compressor (14a-g) with a process gas (28a-g) at a process gas pressure (p_{PG}) can be sealed against an egress of the process gas (28a-g) from the compressor (14a-g),
**characterised by** at least one closure means (22a-g) for automatically closing, brought about by an overpressure of the process gas (28a-g), in the event of a pressure difference (Δp) across the seal (16a-g).

2. Compressor (14a-g) according to Claim 1,
**characterized in that** the closure means (22a-g) is provided for closing a gap (24a-e, 36f, 36g) between the shaft (18a-g) and the closure means (22a-g), wherein the gap (24a-e, 36f, 36g) exists at least in one operating state in which a pressure (p_{DG}) of a seal gas (26a-g) is greater than the pressure (p_{PG}) of the process gas (28a-g).

3. Compressor (14a-g) according to Claim 1 or 2,
**characterized in that** the seal (18a-e) has at least one labyrinth insert (30a-e) and between the shaft (18a-e) and the closure means (22a-e) there is a radial gap (24a-e) which, in its radial extent (32a-e), is at least twice as wide as a radial extent (34a-e) of a gap (36a-e) between the labyrinth insert (30a-e) and the shaft (18a-e).

4. Compressor (14a-g) according to one of the preceding claims,
**characterized by** at least one connection duct (38a-f) for connecting a space (40a-f), which adjoins the closure means (22a-f) on that side (42a-f) of the latter oriented away from the shaft (18a-f), with the process gas space (44a-f).

5. Compressor (14a-g) according to one of the preceding claims,
**characterized in that** the seal (16f, 16g) has at least one labyrinth insert (30f, 30g) and the closure means (22f, 22g) is formed in one piece with the labyrinth insert (30f, 30g).

6. Compressor (14a-g) according to one of the preceding claims,
**characterized in that** the closure means (22f) has at least one recess (46f) which is provided in order to weaken a stiffness of the closure means (22f) in the direction of the shaft (18f).

7. Compressor (14a-g) according to one of the preceding claims,
**characterized in that** the closure means (22a-e) has at least one layer (48a-e) which has emergency running properties.

8. Compressor (14a-g) according to one of the preceding claims,
**characterized in that** the closure means (22a, 22b, 22e) consists of an elastic material (50a, 50b, 50e).

9. Compressor (14a-g) according to one of the preceding claims,
**characterized in that** the closure means (22c) is formed from at least two materials (50c, 52c) which are arranged in alternation in a circumferential direction (54c).

10. Compressor (14a-g) according to one of the preceding claims,
**characterized in that** the closure means (22d) is a spring washer (56d).

11. Compressor (14a-g) according to one of the preceding claims,
**characterized by** a bevel (58e, 58g) for sliding along and compressing the closure means (22e, 22g) in the event of the pressure difference (Δp) which triggers the closure.

12. Compressor (14a-g) according to one of the preceding claims,
**characterized by** at least one sealing element (60a-e, 62a-f) for sealing a space (40a-f), which is arranged on a side (42a-f) of the closure means (22a-f) oriented away from the shaft (18a-f), with respect to a space (64a-f) which is arranged on a side (66a-f) of the closure means (22a-f) oriented towards the shaft (18a-f).

13. Compressor (14a-g) according to one of the preceding claims,
**characterized in that** the closure means (22g) has, in the axial direction (70g) at least one bevel (160g) which corresponds to a bevel (58g) of a support means (162g) for sliding along and compressing the closure means (22g) in the event of the pressure difference (Δp) which triggers the closure.

14. Compressor (14a-g) according to one of the preceding claims,
**characterized by** at least one support means (162g) which has a bevel (58g) corresponding to the bevel (160g), and which fixes the closure means (22g) at least radially.

15. Compressor (14a-g) according to one of the preceding claims,
**characterized in that** the compressor (14a-g) is a turbocompressor (68a-g).

## Revendications

1. Compresseur (14a-g) ayant un dispositif (10a-g) d'étanchéité d'arbre, comprenant au moins une garniture (16a-g) d'étanchéité, qui est constituée entre un arbre (18a-g) et au moins une pièce (20a-g) montée sur l'arbre (18a-g) et au moyen de laquelle un espace (44a-g) pour du gaz de processus dans le compresseur (14a-g), ayant un gaz (28a-g) de processus s'y trouvant sous une pression (pPG) de gaz de processus ? peut être rendu étanche vis-à-vis d'une sortie du gaz (28a-g) de processus du compresseur (14a-g),
**caractérisé par** au moins un moyen (22a-g) de fermeture pour la fermeture automatique, provoquée par une surpression du gaz (28a-g) de processus, s'il se produit une différence (Δp) de pression sur la garniture (16a-g) d'étanchéité.

2. Compresseur (14a-g) suivant la revendication 1,
**caractérisé en ce que** le moyen (22a-g) de fermeture est préparé pour fermer un intervalle (24a-e, 36f, 36g) entre l'arbre (18a-g) et le moyen (22a-g) de fermeture, l'intervalle (24a-e, 36f, 36g) étant constitué au moins dans un état de fonctionnement, dans lequel une pression (P_{DG}) d'un gaz (26a-g) d'étanchéité est plus grande que la pression (p_{PG}) du gaz (28a-g) de processus.

3. Compresseur (14a-g) suivant la revendication 1 ou 2,
**caractérisé en ce que** la garniture (18a-e) d'étanchéité a au moins un insert (30a-e) en labyrinthe et il y a entre l'arbre (18a-e) et le moyen (22a-e) de fermeture un intervalle (24a-e) radial qui, dans son étendue (32a-e) radiale, est au moins deux fois aussi large qu'une étendue (34a-e) radiale d'un intervalle (36a-e) entre l'insert (30a-e) en labyrinthe et l'arbre (18a-e).

4. Compresseur (14a-g) suivant l'une des revendications précédentes,
**caractérisé par** au moins un canal (38a-f) de communication pour mettre en communication avec l'espace (40a-f) pour le gaz de processus un espace (40a-f) qui, du côté (42a-f), éloigné de l'arbre (18a-f), du moyen (22a-f) de fermeture, est voisin de celui-ci.

5. Compresseur (14a-g) suivant l'une des revendications précédentes,
**caractérisé en ce que** la garniture (16f, 16g) d'étanchéité a au moins un insert (30f, 30g) en labyrinthe et le moyen (22f, 22g) de fermeture est constitué d'un seul tenant avec l'insert (30f, 30g) en labyrinthe.

6. Compresseur (14a-g) suivant l'une des revendications précédentes,
**caractérisé en ce que** le moyen (22f) de fermeture a au moins une déformation (46f) qui est faite pour affaiblir une rigidité du moyen (22f) de fermeture dans la direction de l'arbre (18f).

7. Compresseur (14a-g) suivant l'une des revendications précédentes,
**caractérisé en ce que** le moyen (22a-e) de fermeture a au moins une couche qui a des propriétés de tenue avec graissage insuffisant.

8. Compresseur (14a-g) suivant l'une des revendications précédentes,
**caractérisé en ce que** le moyen (22a, 22b, 22e) de fermeture est en un matériau (50a, 50b, 50e) élastique.

9. Compresseur (14a-g) suivant l'une des revendications précédentes,
**caractérisé en ce que** le moyen (22c) de fermeture est en au moins deux matériaux (50c, 52c) qui sont disposés en alternance dans une direction (54c) périphérique.

10. compresseur (14a-g) suivant l'une des revendications précédentes,
**caractérisé en ce que** le moyen (22d) de fermeture est un jonc (56d) élastique.

11. Compresseur (14a-g) suivant l'une des revendications précédentes,
**caractérisé par** un biseau (58e, 58g) pour conduire et comprimer le moyen (22e, 22g) de fermeture lorsque se produit la différence (Δp) de pression déclenchant la fermeture.

12. compresseur (14a-g) suivant l'une des revendications précédentes,
**caractérisé par** au moins un élément (60a-e, 62a-f) d'étanchéité pour rendre étanche un espace (40a-f), qui est disposé d'un côté (40a-f), éloigné de l'arbre (18a-f), du moyen (22a-f) de fermeture, vis-à-vis d'un espace (64a-f), qui est disposé d'un côté (66a-f), tourné vers l'arbre (18a-f), du moyen (22a-f) de fermeture.

13. compresseur (14a-g) suivant l'une des revendications précédentes,
caractérisé ce que le moyen (22g) de fermeture a, dans la direction (70g) axiale, au moins un biseau (160g), qui correspond à un biseau (58g) d'un moyen (162g) d'appui, pour conduire et comprimer le moyen (22) de fermeture lorsque se produit une différence (Δp) de pression déclenchant la fermeture.

14. Compresseur (14a-g) suivant l'une des revendications précédentes,
**caractérisé par** au moins un moyen (162g) d'appui, qui a un biseau (58g) correspondant au biseau (160g) et qui immobilise au moins radialement le moyen (22g) de fermeture.

15. Compresseur (14a-g) suivant l'une des revendications précédentes,
**caractérisé en ce que** le compresseur (14a-g) est un turbocompresseur (68a-g).
